# EUROPÄISCHE PATENTSCHRIFT

(11) **EP 0 908 995 B1**
(45) Veröffentlichungstag und Bekanntmachung des Hinweises auf die Patenterteilung: **19.11.2003**
(21) Anmeldenummer: 97116041.1
(22) Anmeldetag: 16.09.1997
(51) Int. Cl.: H02G 15/04, H02G 3/06, H01R 4/64

(54) **Kabelverschraubung für ein abgeschirmtes Kabel**
Cable gland for shielded cable
Press-étoupe pour câble blindé

(43) Veröffentlichungstag der Anmeldung: 14.04.1999
(73) Patentinhaber: AGRO AG, CH-5502 Hunzenschwil (CH)
(72) Erfinder: Hablützel, Richard, 8903 Birmensdorf (CH)
(74) Vertreter: Groner, Manfred

(56) Entgegenhaltungen:
- EP-A- 0 515 200
- EP-A- 0 778 644
- DE-A- 3 322 476
- FR-A- 2 371 077
- FR-A- 2 438 929

## Beschreibung

Die Erfindung betrifft eine Kabelverschraubung nach dem Oberbegriff des Anspruchs 1.

Eine Kabelverschraubung ähnlicher Art wird vom Anmelder hergestellt und verwendet und ist im EP-A-778644 beschrieben. Bei dieser Kabelverschraubung ist der Druckteil als Ringhülse ausgebildet, die eine zylindrische Bohrung und eine konische Mantelfläche aufweist. In die Ringhülse sind abwechselnd von der Vorder- und der Rückseite her Einschnitte eingearbeitet. In der Abwicklung besitzt diese Ringhülse eine zickzackartig mäandrierende Form. Aufgrund dieser besonderen Ausbildung kann sich die Ringhülse durch axialen Druck eines zusätzlichen zwischen Unterteil und Überwurfmutter einschraubbaren Zwischenstückes über ihre ganze Länge gleichmässig verkleinern und mit gleichmässiger Druckverteilung gegen das schlauchförmige Abschirmgeflecht legen. Die Anwendung dieser Kabelverschraubung ist für Geräte vorgesehen, bei denen sehr hohe Anforderungen an die Funktionssicherheit gestellt sind. Damit die Kabelverschraubung wasserdicht ist, weist das Zwischenstück einen Gewindekragen auf, in den ein Dichteinsatz geschoben ist, der mit einem auf den Gewindekragen aufschraubbaren Überwurfmutter axial stauchbar ist. Diese Kabelverschraubung besteht somit aus vergleichsweise vielen Einzelteilen.

Die EP 0 515 200 A offenbart eine Kabelverschraubung, die ein kreiszylindrisches Druckteil und ein im entspannten Zustand ebenfalls kreiszylindrisches und gummielastisches Dichtungsteil aufweist. Das Dichtungsteil ist mit einer Überwurfmutter spannbar und an die Aussenseite eines Kabels anlegbar. Ein Abschirmgeflecht wird hierbei zwischen der Überwurfmutter und dem Dichtungsteil festgelegt. Dichtungsteil und Druckteil sind separate Teile.

Im Stand der Technik sind auch Kabelverschraubungen bekannt geworden, bei denen das freigelegte Abschirmgeflecht zwischen zwei Scheiben oder konusförmigen Teilen festgeklemmt wird. Auch diese Kabelverschraubungen bestehen aus vergleichsweise vielen Einzelteilen und sind in der Montage vergleichsweise aufwendig.

Der Erfindung liegt die Aufgabe zugrunde, eine Kabelverschraubung der genannten Art zu schaffen, die kostengünstiger herstellbar ist und schneller montiert werden kann und die trotzdem funktionssicher ist.

Die Aufgabe ist bei einer gattungsgemässen Kabelverschraubung dadurch gelöst, dass der Druckteil und der Dichteinsatz eine Einheit bilden, wobei der Dichteinsatz in der Überwurfmutter angeordnet ist und mit zunehmender axialer Verspannung zwischen dem Unterteil und der Überwurfmutter den Querschnitt seiner Bohrung verkleinert. Ein separates Zwischenstück ist hier nicht notwendig. Da der Dichteinsatz und der Druckteil eine Einheit bilden, können diese zusammen montiert werden. Dies vereinfacht wesentlich die Montage und reduziert zudem auch die Anzahl der Einzelteile. Einheit bedeutet hier, dass der Dichteinsatz und das Druckteil gemeinsam untergebracht sind und zusammenwirken. Diese beiden Teile sind vorzugsweise fest miteinander verbunden. Sie können aber auch lose aneinanderliegen. Dadurch dass diese Einheit den axialen Druck auf eine korrespondierende konische Fläche im Unterteil überträgt, wird das dazwischenliegende Schirmgeflechtende sicher geklemmt.

Wesentlich ist zudem, dass die axiale Länge der erfindungsgemässen Kabelverschraubung wesentlich kürzer sein kann als eine Kabelverschraubung nach dem oben genannten Stand der Technik.

Ist nach einer Weiterbildung der Erfindung der Druckteil am Dichteinsatz angespritzt, so ist damit eine besonders kostengünstige Herstellung und einfache Handhabung gewährleistet.

Weitere vorteilhafte Merkmale ergeben sich aus den abhängigen Patentansprüchen, der nachfolgenden Beschreibung sowie der Zeichnung. Ein Ausführungsbeispiel der erfindungsgemässen Kabelverschraubung wird nachfolgend anhand der Zeichnung näher erläutert. Es zeigen:
- Figur 1: ein Teillängsschnitt durch eine erfindungsgemässe Kabelverschraubung,
- Figur 2: ein Teilquerschnitt durch ein Einheit,
- Figur 3: eine Ansicht der Einheit gemäss Figur 2, und
- Figur 4: im Teilquerschnitt eine Einheit gemäss Figur 2 mit montiertem Kabel.

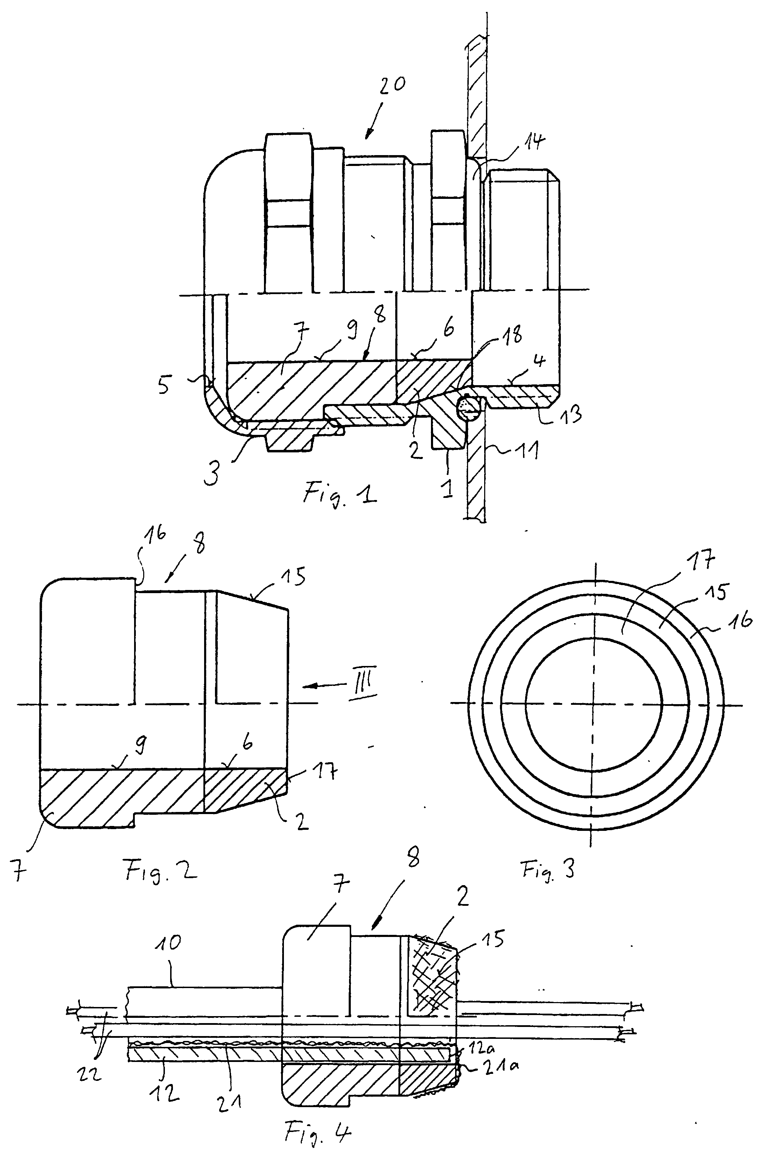

Die in Figur 1 gezeigte Kabelverschraubung 20 weist ein Unterteil 1 und eine Überwurfmutter 3 auf, die vorzugsweise aus einem leitenden Metall hergestellt und miteinander verschraubt sind. Im Innern der Kabelverschraubung 20 befindet sich eine Einheit 8, die aus einem Druckteil 2 sowie einem Dichteinsatz 7 besteht. Die Kabelverschraubung 20 dient dazu, ein elektrisches Kabel 10 (Figur 4) in ein geerdetes Gehäuse 11 einzuführen.

Wie die Figur 4 zeigt, weist das Kabel 10 einen flexiblen Schutzmantel 12 auf, der ein schlauchförmiges Abschirmgeflecht 21 umgibt. Der Schutzmantel 12 ist an seinem vorderen Ende so abisoliert, dass das Abschirmgeflecht 21 mit einem vorderen Ende 21a aus dem Schutzmantel 12 über eine vordere Schnittfläche 12a hinausragt. Innerhalb des Abschirmgeflechtes 21 befinden sich elektrische Leitungen 22.

Zur Befestigung der Kabelverschraubung 20 an dem hier nur schematisch gezeigten Gehäuse 11 besitzt das Unterteil einen Gewindestutzen 13, der direkt in eine Gewindebohrung eingeschraubt werden kann. Bei einem dünnwandigen Gehäuse mit einer Durchgangsbohrung, wie im hier gezeigten Fall, ist auf den Gewindestutzen 13 zusätzlich eine hier nicht gezeigte Mutter aufzuschrauben. Ein Dichtungsring 19 dient dazu, das Unterteil 1 gegenüber dem Gehäuse 11 abzudichten. Das Unterteil 1 weist einen Durchgang 4 auf, der einen konischen Abschnitt 18 aufweist, an den eine korrespondierende konische Aussenseite 15 des Druckteiles 2 angelegt ist. Zwischen den beiden konischen Flächen 18 und 15 ist das abisolierte Ende 21a des Abschirmgeflechtes 21 festgeklemmt. Die dazu erforderliche Klemmkraft wird beim Aufschrauben der Überwurfmutter 3 auf das Unterteil 1 aufgebaut. Hierbei wird der Dichteinsatz 7, der vorzugsweise aus einem gummielastischen Kunststoff hergestellt ist, in axialer Richtung gestaucht und damit radial und axial gespannt. Durch die Stauchung legt sich eine innere Fläche 9 aussenseitig an den Schutzmantel 12 an und dichtet diesen dadurch wasserdicht nach aussen ab. Durch die Spannung des Dichteinsatzes 7 wird zudem der Druckteil 2 an der konischen Fläche 18 angepresst. Der Dichteinsatz 7 kann gemäss Figur 3 kreiszylindrisch sein. Dies gilt auch für den Druckteil 2. Der Druckteil kann aber auch unrund, beispielsweise elliptisch oder mehreckig sein. Wie die Figur 1 zeigt, besitzt der Dichteinsatz 7 eine Schulter 16, an der ein inneres Ende des Unterteils 1 anliegt.

Der Druckteil 2 besteht aus einem vorzugsweise harten Kunststoff oder aus Metall. Er ist lösbar oder unlösbar mit dem Dichteinsatz 7 verbunden. Bei einer bevorzugten Ausführung ist der Druckteil aus einem Kunststoff hergestellt und am Dichteinsatz 7 angespritzt. Eine innere Bohrung 6 ist bündig zu einer inneren Bohrung 9 des Dichteinsatzes 7. Die Grössen der Bohrungen 6 und 9 richten sich nach dem Aussendurchmesser des Kabels 10.

Beim Montieren der Kabelverschraubung 20 wird das Kabel 10 wie oben erwähnt abisoliert und die Einheit 8 auf das Kabel 10 aufgeschoben. Das freie Ende 21a des Abschirmgeflechts 21 wird gemäss Figur 4 um eine vordere Stirnfläche 17 des Druckteils umgelegt und an wenigstens einen Teilbereich der konischen Fläche 15 angelegt. Nun wird die Einheit 8 in das vorgängig am Gehäuse 11 montierte Unterteil 1 eingelegt und die Überwurfmutter 3 mit dem Unterteil 1 verschraubt. Beim Verschrauben wird die Einheit 8 wie bereits erwähnt gestaucht und das Ende 21a festgeklemmt sowie das Kabel 10 abgedichtet. Der Montagevorgang ist somit vergleichsweise schnell und einfach. Spezialwerkzeuge sind nicht erforderlich.

## Patentansprüche

1. Kabelverschraubung für ein abgeschirmtes Kabel (10), die mindestens ein Unterteil (1), ein Druckteil (2) und eine Überwurfmutter (3) aufweist, die jeweils von einer Bohrung (4, 5, 6) durchsetzt und auf das Kabel (10) aufzuschieben sind, welcher Unterteil (1) elektrisch leitend, mit einem Gehäuse (11) verbindbar und mit der Überwurfmutter (3) axial verspannbar ist, und welcher Druckteil (2) mit zunehmender axialer Verspannung zwischen dem Unterteil (1) und der Überwurfmutter (3) eine konische Aussenseite (15) gegen einen konischen Abschnitt (18) des Unterteiles (1) presst und so das um eine vordere Stirnfläche (17) herumzulegendes freies Ende des Abschirmgeflechts (21a) kontaktierend klemmbar ist, und mit einem Dichteinsatz (7), der an einen Schutzmantel (12) des Kabels (10) anzulegen ist, um das Innere der Kabelverschraubung (20) gegen das Eindringen von Wasser zu schützen, **dadurch gekennzeichnet, dass** der Druckteil (2) und der Dichteinsatz (7) eine Einheit (8) bilden, wobei der Dichteinsatz (7) in der Überwurfmutter (3) angeordnet ist und mit zunehmender axialer Verspannung zwischen dem Unterteil (1) und der Überwurfmutter (3) den Querschnitt seiner Bohrung (9) verkleinert.

2. Verschraubung nach Anspruch 1, **dadurch gekennzeichnet, dass** der Druckteil (2) am Dichteinsatz (7) angeformt ist.

3. Verschraubung nach Anspruch 1 oder 2, **dadurch gekennzeichnet, dass** der Druckteil (2) am Dichteinsatz (7) angespritzt ist.

4. Verschraubung nach einem der Ansprüche 1 bis 3, **dadurch gekennzeichnet, dass** der Dichteinsatz (7) aus einem gummielastischen Werkstoff und der Druckteil (2) aus einem anderen wesentlich härteren Werkstoff hergestellt ist.

5. Verschraubung nach einem der Ansprüche 1 bis 4, **dadurch gekennzeichnet, dass** der Druckteil (2) im Querschnitt kreisförmig ist.

6. Verschraubung nach einem der Ansprüche 1 bis 4, **dadurch gekennzeichnet, dass** der Druckteil (2) im Querschnitt unrund ist.

7. Verschraubung nach einem der Ansprüche 1 bis 6, **dadurch gekennzeichnet, dass** der Dichteinsatz (7) mit einem Ende (7a) in der Überwurfmutter (3) und mit einem anderen Ende (7b) in das Unterteil (1) eingreift.

8. Verschraubung nach Anspruch 7, **dadurch gekennzeichnet, dass** der Dichteinsatz (7) am Umfang eine Schulter (16) aufweist, welche am Unterteil (1) anliegt.

## Claims

1. Screwed cable gland for a shielded cable, which has at least one lower part (1) a pressing part (2) and a union nut (3), which are traversed each by a respective hole (4, 5, 6) and are to be pushed over said cable (10), wherein said lower part (1) can be connected to a housing (11) in an electrically conducting manner and can be axially tensioned with said union nut (3), and wherein said pressing part (2) presses a conical outside against a conical section of said lower part (1) with increasing axial tension between said lower part (1) and said union nut (3) and thus clamps the free end of said shielding braiding (21a) that is to be folded around said front end face in a contacting manner, and with a sealing insert (7), which is to be brought into contact with a protective jacket (12) of said cable (10) in order to protect the inside of said screwed cable gland (20) against the penetration of water, **characterized in that** said pressing part (2) and said sealing insert (7) form one unit (8), wherein said sealing insert (7) is arranged in said union nut (3) and reduces the cross section of said hole (9) with increasing axial tension between said lower part (1) and said union not (3).

2. Screwed gland in accordance with claim 1, wherein said pressing part (2) is made in one piece with said sealing unit (7).

3. Screwed gland in accordance with claim 1, wherein said pressing part (2) is integrally injection-molded with said sealing unit (7).

4. Screwed gland in accordance with claim 1, wherein said sealing insert (7) is made of a rubber-elastic material and said pressing part (2) is made of another, substantially harder material.

5. Screwed gland in accordance with claim 1, wherein said pressing part (2) has a round cross section.

6. Screwed gland in accordance with claim 1, wherein said pressing part (2) has a nonround cross section.

7. Screwed gland in accordance with claim 1, wherein said sealing insert (7) engages said union nut (3) with one end and said lower part (1) with the other end (7b).

8. Screwed gland in accordance with claim 7, wherein said sealing insert (7) has a shoulder (16) on its circumference, and said shoulder is in contact with said lower part (1).

## Revendications

1. Passe-câble à vis pour un câble blindé (10), qui comporte au moins une partie inférieure (1), une partie de serrage (2) et un écrou-raccord (3), qui sont traversés respectivement par un perçage (4,5,6) et doivent être emmanchés sur le câble (10), laquelle partie inférieure (1) est électriquement conductrice, peut être reliée à un boîtier (11) et peut être serrée axialement avec l'écrou-raccord (3), et laquelle partie de serrage (2) serre avec un serrage axial croissant entre la partie inférieure (1) et l'écrou-raccord (3) un côté extérieur conique (15) contre une section conique (18) de la partie inférieure (1), l'extrémité libre de la tresse de blindage (21a), qui doit être appliquée autour d'une surface frontale avant (17), pouvant être serrée avec établissement d'un contact, et comportant un insert d'étanchéité (7), qui doit être appliqué sur une enveloppe de protection (12) du câble (10), de manière à protéger l'intérieur du passe-câble à vis (20) vis-à-vis de la pénétration d'eau, **caractérisé en ce que** la partie de serrage (2) et l'insert d'étanchéité (7) forment une unité (8), et dans lequel l'insert d'étanchéité (7) est disposé dans l'écrou-raccord (3) et, lorsque le serrage axial augmente entre la partie inférieure (1) et l'écrou-raccord (3), réduit la section transversale du perçage (9) de ce dernier.

2. Système à vis selon la revendication 1, **caractérisé en ce que** la partie de serrage (2) est formée par moulage sur l'insert d'étanchéité (7).

3. Système à vis selon la revendication 1 ou 2, **caractérisé en ce que** la partie de serrage (2) est moulée par injection sur l'insert d'étanchéité (7).

4. Système à vis selon l'une des revendications 1 à 3, **caractérisé en ce que** l'insert d'étanchéité (7) est réalisé en un matériau présentant l'élasticité du caoutchouc et la partie de serrage (2) est formée par un autre matériau nettement plus dur.

5. Système à vis selon l'une des revendications 1 à 4, **caractérisé en ce que** la partie de serrage (2) possède une forme circulaire en coupe transversale.

6. Système à vis selon l'une des revendications 1 à 4, **caractérisé en ce que** la partie de serrage (2) est non circulaire en coupe transversale.

7. Système à vis selon l'une des revendications 1 à 6, **caractérisé en ce que** l'insert d'étanchéité (7) s'engage par une extrémité (7a) dans l'écrou-raccord (3) et par une autre extrémité (7b) dans la partie inférieure (1).

8. Système à vis selon la revendication 7, **caractérisé en ce que** l'insert d'étanchéité (7) comporte, sur sa périphérie, un épaulement (16), qui s'applique contre la partie inférieure (1).
